# EUROPEAN PATENT APPLICATION

(11) **EP 3 628 970 A1**
(43) Date of publication of application: **01.04.2020**
(21) Application number: 19190968.8
(22) Date of filing: 09.08.2019
(51) Int. Cl.: G01C 21/32, G06F 16/29

(54) **METHOD, APPARATUS, COMPUTING DEVICE, AND MEDIUM FOR UPGRADING MAP OF SELF-DRIVING VEHICLE**

(30) Priority: 30.08.2018 CN 201811004943
(71) Applicant: Baidu Online Network Technology (Beijing) Co., Ltd., Beijing 100085 (CN)
(72) Inventor: SHI, Yifeng, Beijing, 100085 (CN); TAO, Sheng, Beijing, 100085 (CN); WANG, Haisong, Beijing, 100085 (CN); TAO, Ji, Beijing, 100085 (CN)
(74) Representative: Manna, Sara

(57) **Abstract**

The present disclosure proposes a method and an apparatus for upgrading a map of a self-driving vehicle. The method includes: obtaining a target position and a current position of the self-driving vehicle; obtaining a navigation path of the self-driving vehicle according to the target position and the current position; obtaining information of a map required by the navigation path, the information comprising a serial number of the map required and a version number of the map required; determining whether the map required is stored locally in the self-driving vehicle according to the serial number of the map required; if yes, determining whether a version number of the stored map is consistent with the version number of the map required; and if not, downloading a corresponding map from a server.

## Description

### FIELD

The present disclosure relates to a field of artificial intelligence technologies, and more particularly, to a method, an apparatus, a computing device, and a medium for upgrading a map of a self-driving vehicle.

### BACKGROUND

With the development of intelligent transportation technologies, vehicle intelligence technologies are being applied widely, and self-driving vehicles have become a research hotspot. In the related art, the self-driving vehicle may employ a video camera, a radar sensor, and a laser range finder to learn about surrounding traffic conditions, and navigate by a high-precision map through a road ahead, to achieve an automatic driving.

### SUMMARY

A first aspect of embodiments of the present disclosure proposes a method for upgrading a map of a self-driving vehicle. The method includes: obtaining a target position of the self-driving vehicle and a current position of the self-driving vehicle; obtaining a navigation path of the self-driving vehicle according to the target position and the current position; obtaining information of a map required by the navigation path from a server, the information including a serial number of the map required and a version number of the map required; determining whether the map required is stored locally in the self-driving vehicle according to the serial number of the map required; in response to the map required being stored locally in the self-driving vehicle, determining whether a version number of the stored map is consistent with the version number of the map required; and in response to the version number of the stored map is not consistent with the version number of the map required, downloading the map required from the server.

In an embodiment, the method further includes: in response to the map required being not stored locally in the self-driving vehicle, downloading the map required from the server.

In an embodiment, the method further includes: in response to the map required failing to be downloaded from the server, provide a prompting message to a driver to switch to a manual driving mode.

In an embodiment, the method further includes: under the manual driving mode, collecting point cloud data and image data using a radar and a camera of the self-driving vehicle; generating map data according to the point cloud data and the image data; transmitting the map data to the server, the server grading the map data to obtain a score, and storing the map data and upgrading the corresponding version number in response to the score being greater than a preset threshold.

In an embodiment, generating the map data according to the point cloud data and the image data includes: obtaining the current position of the self-driving vehicle; determining whether the current position is an entry point of a road; and in response to the current position being the entry point of the road, generating the map data starting from the entry point of the road and ending at an exit point where the self-driving vehicle driving out of the road, the map data between the entry point and the exit point of the road being the map data of the road.

A second aspect of embodiments of the present disclosure proposes an apparatus for upgrading a map of a self-driving vehicle. The apparatus includes a first obtaining module, a second obtaining module, a third obtaining module, a determining module, and a processing module. The first obtaining module is configured to obtain a target position of the self-driving vehicle and a current position of the self-driving vehicle. The second obtaining module is configured to obtain a navigation path of the self-driving vehicle according to the target position and the current position. The third obtaining module is configured to obtain information of a map required by the navigation path from a server, the information including a serial number of the map required and a version number of the map required. The determining module is configured to determine whether the map required is stored locally in the self-driving vehicle according to the serial number of the map required. The processing module is configured to, in response to the map required being stored locally in the self-driving vehicle, determine whether a version number of the stored map is consistent with the version number of the map required, and in response to the version number of the stored map is not consistent with the version number of the map required, download the map required from the server.

In an embodiment, the apparatus further includes: a downloading module, configured to, in response to the map required being not stored locally in the self-driving vehicle, download the corresponding map from the server.

In an embodiment, the apparatus further includes: a prompting module, configured to, in response to the corresponding map failing to be downloaded from the server, prompt a driver to switch to a manual driving mode.

In an embodiment, the apparatus further includes: a collecting module, configured to collect point cloud data and image data using a radar and a camera of the self-driving vehicle; a generating module, configured to generate map data according to the point cloud data and the image data; and a transmitting module, configured to transmit the map data to the server, the server grading the map data to obtain a score, and storing the map data and upgrading the corresponding version number in response to the score being greater than a preset threshold.

In an embodiment, the generating module includes: an obtaining unit, configured to obtain the current position of the self-driving vehicle; a determining unit, configured to determine whether the current position is an entry point of a road; and a generating unit, configured to, in response to the current position being the entry point of the road, generate the map data starting from the entry point of the road and ending at the exit point where the self-driving vehicle driving out of the road, the map data between the entry point and the exit point of the road being the map data of the road.

A third aspect of embodiments of the present disclosure proposes a computing device. The device includes a memory, a processor, and computer programs stored in the memory and executable by the processor. When the processor executes the computer programs, the method according to the above embodiments is performed.

A fourth aspect of embodiments of the present disclosure proposes a non-transitory computer readable storage medium, configured to store computer programs that, when executed by a processor, perform the method according to the above embodiments.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of a method for upgrading a map of a self-driving vehicle according to embodiments of the present disclosure.
Fig. 2 is a flow chart of a method for upgrading a map of a self-driving vehicle according to embodiments of the present disclosure.
Fig. 3 is a block diagram of an apparatus for upgrading a map of a self-driving vehicle according to embodiments of the present disclosure.
Fig. 4 is a block diagram of an apparatus for upgrading a map of a self-driving vehicle according to embodiments of the present disclosure.
Fig. 5 is a block diagram of an exemplary computing device suitable for realizing embodiments of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. Embodiments described herein with reference to drawings are explanatory, serve to explain the present disclosure, and are not construed to limit embodiments of the present disclosure.

In the related art, a self-driving vehicle may employ a video camera, a radar sensor, and a laser range finder to learn about surrounding traffic conditions, and navigate by a high-precision map through a road ahead. However, due to a diversity of places, high-precision maps corresponding to many places may be lacking, which will lead to a failure of automatic driving. Alternatively, the high-precision map should be constantly upgraded due to a maintenance, an expansion, and a diversion of the road. If the map in the self-driving vehicle is not updated, a safety accident may be caused.

For above problems, embodiments of the present disclosure propose a method for upgrading a map of a self-driving vehicle. A target position of the self-driving vehicle and a current position of the self-driving vehicle are obtained; a navigation path of the self-driving vehicle is obtained according to the target position and the current position; information of a map required by the navigation path is obtained, in which the information includes a serial number of the map required and a version number of the map required; it is determined whether the map required is stored locally in the self-driving vehicle according to the serial number of the map required; in response to the map required being stored locally in the self-driving vehicle, it is determined whether a version number of the stored map is consistent with the version number of the map required; and in response to the version number of the stored map is not consistent with the version number of the map required, a corresponding map is downloaded from a server.

The method and the apparatus for upgrading the map of the self-driving vehicle will be described in detail with reference to the accompanying drawings.

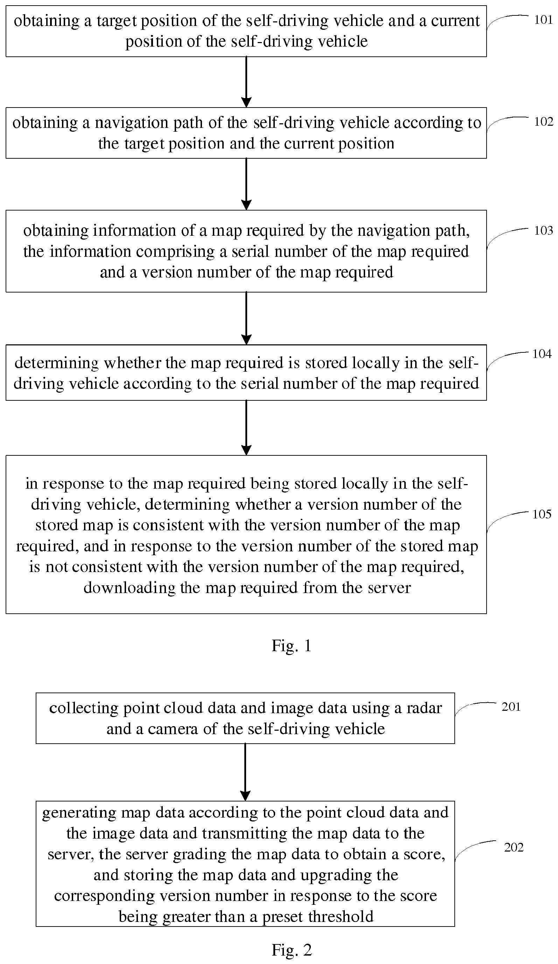

Fig. 1 is a flow chart of a method for upgrading a map of a self-driving vehicle according to embodiments of the present disclosure.

As illustrated in Fig. 1, the method includes acts in the following blocks.

At block 101, the target position of the self-driving vehicle and the current position of the self-driving vehicle are obtained.

The self-driving vehicle, also known as a driverless vehicle, a computer-driven vehicle, or a wheeled mobile robot, is a kind of intelligent vehicles that realizes driverless driving through a computer system. The self-driving vehicle may employ a video camera, a radar sensor, and a laser range finder to learn about surrounding traffic conditions, and navigate by a local high-precision map through a road ahead. At present, the self-driving vehicle is equipped with a driver who may control a steering wheel in case of an emergency during a driving of the vehicle, so that under an abnormality of the self-driving vehicle, it may be switched to a manual driving mode to avoid an accident.

It should be noted that, the high-precision map employed by the self-driving vehicle is far more accurate than an ordinary navigation map. It contains richer and more detailed data information, and maintains an update rate of a minute level, even a second level. Compared with an ordinary electronic map, the high-precision map has a higher positioning accuracy. For example, a GPS (global positioning system) navigation currently employed in a mobile phone, typically has an accuracy of a range of 5 to 10 meters, or even less in a building-dense area or an underground tunnel. The high-precision map required by automatic driving technologies need to have the accuracy of a centimeter level.

In embodiments of the present disclosure, before the automatic driving, a user may enter a destination for a navigation. Therefore, the target position of the self-driving vehicle may be obtained by a processor. The current position of the self-driving vehicle may be obtained by GPS.

At block 102, the navigation path of the self-driving vehicle is obtained according to the target position and the current position.

In detail, the navigation path of the self-driving vehicle is generated according to the obtained target position and current position of the self-driving vehicle. One or more navigation paths may be generated, such as a distance optimal path, a high-speed priority path, a time shortest path. However, one of these paths may be selected.

At block 103, information of a map required by the navigation path is obtained. The information includes a serial number of the map required and a version number of the map required.

In detail, the information of the map required by the navigation path determined at the block 102 may be obtained from the server. The information includes the serial number of the map required and the version number of the map required.

It should be noted that, the serial number is configured to determine whether the map required is stored locally in the self-driving vehicle. The version number is configured to determine whether the version number of the stored map is consistent with the version number of the map required.

At block 104, it is determined whether the map required is stored locally in the self-driving vehicle according to the serial number of the map required.

In the embodiment, the information of the map required by the navigation path obtained according to the target position and the current position may include the serial number of the map required. Further, it is determined whether the map required is stored locally in the self-driving vehicle according to the serial number of the map required. The above map is the high-precision map different from an ordinary navigation map.

As a possible implementation, it is determined that the map required is not stored locally in the self-driving vehicle according to the serial number of the map required, and the corresponding map need to be download from the server. However, in response to the corresponding map being not stored in the server and the corresponding map failing to be downloaded from the server, a current driving mode is obtained. When the current driving mode is an automatic driving mode, a driver is prompted to switch to a manual driving mode to keep the vehicle driving normally. The manual driving mode is a mode that requires the driver to operate.

As another possible implementation, it is determined that the map required is stored locally in the self-driving vehicle according to the serial number of the map required, the act in block 105 is executed.

At block 105, in response to the map required being stored locally in the self-driving vehicle, it is determined whether a version number of the stored map is consistent with the version number of the map required; and in response to the version number of the stored map is not consistent with the version number of the map required, the map required is downloaded from a server.

In detail, when it is determined that the map required is stored locally in the self-driving vehicle according to the serial number of the map required, the version number of the map stored locally is obtained, and the version number of the map required by the navigation path is obtained from the server. It is determined whether the version number of the stored map is consistent with the version number of the map required. If yes, the self-driving vehicle keeps driving using the map, and if not, the corresponding map is downloaded from the server and the map stored locally in the self-driving vehicle is updated.

With the method for upgrading the map of the self-driving vehicle, the target position of the self-driving vehicle and the current position of the self-driving vehicle are obtained; the navigation path of the self-driving vehicle is obtained according to the target position and the current position; the information of the map required by the navigation path is obtained, in which the information includes the serial number of the map required and the version number of the map required; it is determined whether the map required is stored locally in the self-driving vehicle according to the serial number of the map required; in response to the map required being stored locally in the self-driving vehicle, it is determined whether the version number of the stored map is consistent with the version number of the map required; and in response to the version number of the stored map is not consistent with the version number of the map required, the corresponding map is downloaded from the server. Thus, through obtaining the information of the map required by the navigation path of the self-driving vehicle, it may be determined whether the map corresponding to the navigation path is the latest map, the map employed by the self-driving vehicle is constantly updated, which greatly improves a driving safety of the self-driving vehicle.

As an example, due to a large amount of data of the map employed by the self-driving vehicle, high-precision maps of all regions cannot be prestored in the self-driving vehicle. Moreover, due to a diversity of places, many places may not have corresponding high-precision maps. Thus, when there is no corresponding high-precision map of the road ahead during the process of driving, the automatic driving will be abnormal.

For the above problem, embodiments of the present disclosure propose another method for upgrading the map of the self-driving vehicle. After the self-driving vehicle switching to the manual driving mode, point cloud data and image data are collected using a radar and a camera of the self-driving vehicle; map data are generated according to the point cloud data and the image data, and the map data are transmitted to the server. The server grades the map data to obtain a score, and stores the map data and upgrades the corresponding version number in response to the score being greater than a preset threshold.

Fig. 2 is a flow chart of a method for upgrading a map of a self-driving vehicle according to embodiments of the present disclosure.

As illustrated in Fig. 2, the method includes acts in the following blocks.

At block 201, the point cloud data and the image data are collected using the radar and the camera of the self-driving vehicle.

The point cloud data and the image data may both include a timestamp. The timestamp may be a sequence of characters that uniquely identifies a time of a moment.

In the embodiment, in response to the corresponding map required by the navigation path of the self-driving vehicle (the navigation path is obtained according to the target position and the current position of the self-driving vehicle) being not stored in the server, the current driving mode is obtained. When the current driving mode is the automatic driving mode, the driver is prompted to switch to the manual driving mode. Then, the point cloud data and the image data are collected using the radar and the camera of the self-driving vehicle.

The point cloud data is recorded in the form of points after being scanned by the radar. Each point contains a 3D coordinate, and some may contain color information and reflection intensity information. According to the point cloud data, a length, a width, and a position coordinate of the road at the entry point of the self-driving vehicle may be obtained. According to the image data, a type of road, a type and a color of an identification line in the road may be obtained. For example, a stop line, a solid line, a dotted line, a yellow line, a white line and other road information in the road is obtained according to the image data.

It is understood that, obstacle information, road information, traffic light information, intersection information, parking area information, stop line information, crosswalk information, and the like may be collected by the radar and the camera configured in the self-driving vehicle.

At block 202, map data are generated according to the point cloud data and the image data, and the map data are transmitted to the server. The server grades the map data to obtain a score, and the server stores the map data and upgrades the corresponding version number in response to the score being greater than a preset threshold.

In the embodiment, the current position of the self-driving vehicle is obtained. It is determined whether the current position is the entry point of the road in the map of the navigation path stored in the server. If not, it is kept driving until the current position of the self-driving vehicle obtained is the entry point of the road. Further, the point cloud data and the image data with the same timestamp are combined to generate the map data of the entry point of the road according to the length, the width, the position coordinate and the type of the road at the entry point which is obtained according to a matching of the timestamp, as well as the type and color of the identification line. When the current position of the self-driving vehicle obtained is an exit point, the radar and the camera are stopped collecting the point cloud data and the image data. The map data starting from the entry point of the road and ending at the exit point where the self-driving vehicle driving out of the road are generated according to the point cloud data and the image data. That is, the map data between the entry point and the exit point of the road are the map data of the road.

Further, the map data generated according to the point cloud data and the image data are transmitted to the server. The server may grade the map data. The server may store the map data and upgrade the corresponding version number, in response to the score being greater than a preset threshold.

The preset threshold refers to a preset value used to measure whether the map data reported by the self-driving vehicle conforms to a standard.

It is understood that, the server grades the map data reported by the self-driving vehicle by combining with the navigation map corresponding to the road information. If a score is greater than a preset threshold, the server stores the map data and upgrades the version number in the map data. Therefore, the high-precision map may be downloaded from the server while other self-driving vehicles driving to this place or area.

As a possible implementation, when the server grades the map data reported by the self-driving vehicle by combining with the navigation map corresponding to the road information, it may receive the map data from a plurality of self-driving vehicles simultaneously. The server will grade each map data, and select the map data with a highest score in the plurality of map data with the score being greater than the preset threshold to store, and update the version number of the map data as the version number of the selected map data.

Further, when other self-driving vehicles are driving to the road, the server may also receive messages for requesting a high-precision map from the other self-driving vehicles. The messages for requesting the high-precision map may include the road information. Further, the stored high-precision map is obtained according to the road information and transmitted to the other self-driving vehicles. Thus, the high-precision map may be obtained from the server while the other self-driving vehicles driving to this place or area.

With the method for upgrading the map of the self-driving vehicle, after switching from the automatic driving mode to the manual driving mode, the point cloud data and the image data are collected using the radar and the camera of the self-driving vehicle; the map data are generated according to the point cloud data and the image data, and the map data are transmitted to the server. The server grades the map data to obtain the score, and the server stores the map data and upgrades the corresponding version number in response to the score being greater than the preset threshold. Thus, the map data are generated through collecting the point cloud data and the image data, and the map information in the server is further updated. The method improves the collection accuracy of map during the driving of the self-driving vehicle, to accurately determine the road condition of the road ahead, thus improving the safety of the self-driving vehicle.

In order to realize the above embodiments, the present disclosure further proposes an apparatus for upgrading the map of the self-driving vehicle.

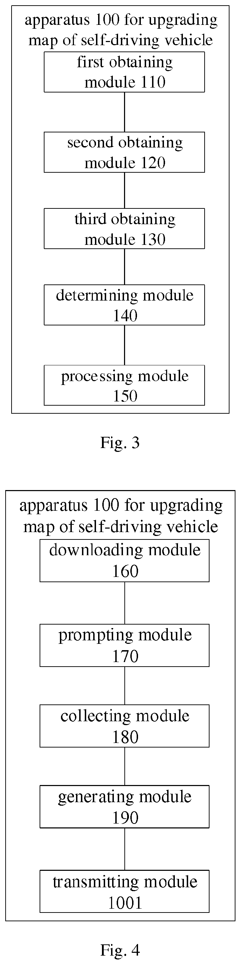

Fig. 3 is a block diagram of an apparatus for upgrading a map of a self-driving vehicle according to embodiments of the present disclosure.

As illustrated in Fig. 3, the apparatus 100 includes a first obtaining module 110, a second obtaining module 120, a third obtaining module 130, a determining module 140, and a processing module 150.

The first obtaining module 110 is configured to obtain a target position of the self-driving vehicle and a current position of the self-driving vehicle.

The second obtaining module 120 is configured to obtain a navigation path of the self-driving vehicle according to the target position and the current position.

The third obtaining module 130 is configured to obtain information of a map required by the navigation path from a server. The information may include a serial number of the map required and a version number of the map required.

The determining module 140 is configured to determine whether the map required is stored locally in the self-driving vehicle according to the serial number of the map required.

The processing module 150 is configured to, in response to the map required being stored locally in the self-driving vehicle, determine whether a version number of the stored map is consistent with the version number of the map required, and in response to the version number of the stored map is not consistent with the version number of the map required, download the map required from the server.

As a possible implementation, referring to Fig. 4, on the basis of Fig. 3, the apparatus 100 further includes a downloading module 160 and a prompting module 170.

The downloading module 160 is configured to, in response to the map required being not stored locally in the self-driving vehicle, download the corresponding map from the server.

The prompting module 170 is configured to, in response to the corresponding map failing to be downloaded from the server, prompt a driver to switch to a manual driving mode.

As a possible implementation, the apparatus 100 further includes a collecting module 180, a generating module 190, and a transmitting module 1001.

The collecting module 180 is configured to collect point cloud data and image data using a radar and a camera of the self-driving vehicle.

The generating module 190 is configured to generate map data according to the point cloud data and the image data.

The transmitting module 1001 is configured to transmit the map data to the server. The server may grade the map data to obtain a score, and store the map data and upgrade the corresponding version number, in response to the score being greater than a preset threshold.

As a possible implementation, the generating module 190 includes an obtaining unit, a judging unit and a generating unit.

The obtaining unit is configured to obtain the current position of the self-driving vehicle.

The judging unit is configured to determine whether the current position is an entry point of a road.

The generating unit is configured to, in response to the current position being the entry point of the road, generate the map data starting from the entry point of the road and ending at the exit point where the self-driving vehicle driving out of the road, the map data between the entry point and the exit point of the road being the map data of the road.

With the apparatus for upgrading the map of the self-driving vehicle, the target position of the self-driving vehicle and the current position of the self-driving vehicle are obtained; the navigation path of the self-driving vehicle is obtained according to the target position and the current position; the information of the map required by the navigation path is obtained, in which the information includes the serial number of the map required and the version number of the map required; it is determined whether the map required is stored locally in the self-driving vehicle according to the serial number of the map required; in response to the map required being stored locally in the self-driving vehicle, it is determined whether the version number of the stored map is consistent with the version number of the map required; and in response to the version number of the stored map is not consistent with the version number of the map required, the corresponding map is downloaded from the server. Thus, through obtaining the information of the map required by the navigation path of the self-driving vehicle, it may be determined whether the map corresponding to the navigation path is the latest map, the map employed by the self-driving vehicle is constantly updated, which greatly improves a driving safety of the self-driving vehicle.

In order to realize the above embodiments, the present disclosure further proposes a computing device. The device includes a memory, a processor, and computer programs stored in the memory and executable by the processor. When the processor executes the computer programs, the method according to the above embodiments is performed.

In order to realize the above embodiments, the present disclosure further proposes a non-transitory computer readable storage medium, configured to store computer programs that, when executed by a processor, perform the method according to the above embodiments.

In order to realize the above embodiments, the present disclosure further proposes a computer program product storing instructions that, when executed by a processor, perform the method according to the above embodiments.

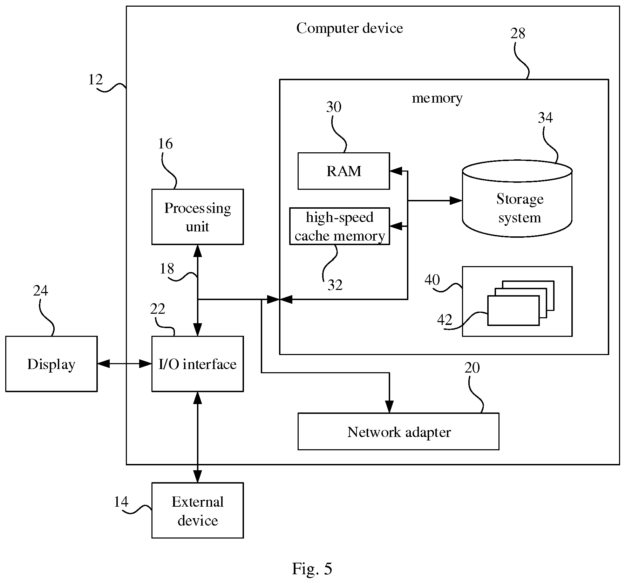

Fig. 5 is a block diagram of an exemplary computing device suitable for realizing embodiments of the present disclosure. The device 12 illustrated in Fig. 5 is only illustrated as an example, and should not be considered as any restriction on the function and the usage range of embodiments of the present disclosure.

As illustrated in Fig. 5, the device 12 is in the form of a general-purpose computing apparatus. The device 12 may include, but is not limited to, one or more processors or processing units 16, a system memory 28, and a bus 18 connecting different system components (including the system memory 28 and the processing unit 16).

The bus 18 represents one or more of several types of bus architectures, including a memory bus or a memory control bus, a peripheral bus, a graphic acceleration port (GAP) bus, a processor bus, or a local bus using any bus architecture in a variety of bus architectures. For example, these architectures include, but are not limited to, an industry standard architecture (ISA) bus, a micro-channel architecture (MCA) bus, an enhanced ISA bus, a video electronic standards association (VESA) local bus, and a peripheral component interconnect (PCI) bus.

Typically, the device 12 may include multiple kinds of computer-readable media. These media may be any storage media accessible by the device 12, including transitory or non-transitory storage medium and movable or unmovable storage medium.

The memory 28 may include a computer-readable medium in a form of volatile memory, such as a random-access memory (RAM) 30 and/or a high-speed cache memory 32. The device 12 may further include other transitory/non-transitory storage media and movable/unmovable storage media. In way of example only, the storage system 34 may be used to read and write non-removable, non-volatile magnetic media (not shown in the figure, commonly referred to as "hard disk drives"). Although not illustrated in Fig. 5, it may be provided a disk driver for reading and writing movable non-volatile magnetic disks (e.g. "floppy disks"), as well as an optical driver for reading and writing movable non-volatile optical disks (e.g. a compact disc read only memory (CD-ROM, a digital video disc read only Memory (DVD-ROM), or other optical media). In these cases, each driver may be connected to the bus 18 via one or more data medium interfaces. The memory 28 may include at least one program product, which has a set of (for example at least one) program modules configured to perform the functions of embodiments of the present disclosure.

A program/application 40 with a set of (at least one) program modules 42 may be stored in memory 28, the program modules 42 may include, but not limit to, an operating system, one or more application programs, other program modules and program data, and any one or combination of above examples may include an implementation in a network environment. The program modules 42 are generally configured to implement functions and/or methods described in embodiments of the present disclosure.

The device 12 may also communicate with one or more external devices 14 (e.g., a keyboard, a pointing device, a display 24, and etc.) and may also communicate with one or more devices that enables a user to interact with the computer system/server 12, and/or any device (e.g., a network card, a modem, and etc.) that enables the computer system/server 12 to communicate with one or more other computing devices. This kind of communication can be achieved by the input/output (I/O) interface 22. In addition, the device 12 may be connected to and communicate with one or more networks such as a local area network (LAN), a wide area network (WAN) and/or a public network such as the Internet through a network adapter 20. As shown in Fig.5, the network adapter 20 communicates with other modules of the device 12 over bus 18. It should be understood that although not shown in the figure, other hardware and/or software modules may be used in combination with the device 12, which including, but not limited to, microcode, device drivers, redundant processing units, external disk drive arrays, RAID systems, tape drives, as well as data backup storage systems and the like.

The processing unit 16 can perform various functional applications and data processing by running programs stored in the system memory 28, for example, to perform method for upgrading the map of the self-driving vehicle provided by embodiments of the present disclosure.

In the description of the present disclosure, reference throughout this specification to "an embodiment," "some embodiments," "example," "a specific example," or "some examples," means that a particular feature, structure, material, or characteristic described in connection with the embodiment or example is included in at least one embodiment or example of the present disclosure. In the specification, the terms mentioned above are not necessarily referring to the same embodiment or example of the present disclosure. Furthermore, the particular features, structures, materials, or characteristics may be combined in any suitable manner in one or more embodiments or examples. Besides, any different embodiments and examples and any different characteristics of embodiments and examples may be combined by those skilled in the art without contradiction.

It should be illustrated that, in descriptions of the present disclosure, terms such as "first" and "second" are used herein for purposes of description and are not construed as indicating or implying relative importance or significance. Furthermore, in the description of the present disclosure, "a plurality of" means two or more than two, unless specified otherwise.

Any procedure or method described in the flow charts or described in any other way herein may be understood to comprise one or more modules, portions or parts for storing executable codes that realize logic functions or procedures. Moreover, advantageous embodiments of the present disclosure comprise other implementations in which the order of execution is different from that which is depicted or discussed, including executing functions in a substantially simultaneous manner or in an opposite order according to the related functions, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by hardware, software, firmware or combination thereof. In the above embodiments, a plurality of steps or methods may be realized by software or firmware stored in the memory and executed by an appropriate instruction execution system. For example, if it is realized by the hardware, likewise in another embodiment, it may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. A method for upgrading a map of a self-driving vehicle, comprising:
obtaining (101) a target position of the self-driving vehicle and a current position of the self-driving vehicle;
obtaining (102) a navigation path of the self-driving vehicle according to the target position and the current position;
obtaining (103) information of a map required by the navigation path from a server, the information comprising a serial number of the map required and a version number of the map required;
determining (104) whether the map required is stored locally in the self-driving vehicle according to the serial number of the map required;
in response to the map required being stored locally in the self-driving vehicle, determining (105) whether a version number of the stored map is consistent with the version number of the map required; and
in response to the version number of the stored map is not consistent with the version number of the map required, downloading (105) the map required from the server.

2. The method of claim 1, further comprising:
in response to the map required being not stored locally in the self-driving vehicle, downloading the map required from the server.

3. The method of claim 1 or 2, further comprising:
in response to the map required failing to be downloaded from the server, provide a prompting message to a driver to switch to a manual driving mode.

4. The method of claim 3, further comprising:
under the manual driving mode, collecting (201) point cloud data and image data using a radar and a camera of the self-driving vehicle;
generating (202) map data according to the point cloud data and the image data; and
transmitting (202) the map data to the server,
the server grading the map data to obtain a score, and storing the map data and upgrading the corresponding version number in response to the score being greater than a preset threshold.

5. The method of claim 4, wherein generating (202) the map data according to the point cloud data and the image data comprises:
obtaining the current position of the self-driving vehicle;
determining whether the current position is an entry point of a road; and
in response to the current position being the entry point of the road, generating the map data starting from the entry point of the road and ending at an exit point where the self-driving vehicle driving out of the road,
the map data between the entry point and the exit point of the road being the map data of the road.

6. An apparatus for upgrading a map of a self-driving vehicle, comprising:
a first obtaining module (110), configured to obtain a target position of the self-driving vehicle and a current position of the self-driving vehicle;
a second obtaining module (120), configured to obtain a navigation path of the self-driving vehicle according to the target position and the current position;
a third obtaining module (130), configured to obtain information of a map required by the navigation path from a server, the information comprising a serial number of the map required and a version number of the map required;
a determining module (140), configured to determine whether the map required is stored locally in the self-driving vehicle according to the serial number of the map required; and
a processing module (150), configured to, in response to the map required being stored locally in the self-driving vehicle, determine whether a version number of the stored map is consistent with the version number of the map required, and in response to the version number of the stored map is not consistent with the version number of the map required, download the map required from the server.

7. The apparatus of claim 6, further comprising:
a downloading module (160), configured to, in response to the map required being not stored locally in the self-driving vehicle, download the corresponding map from the server.

8. The apparatus of claim 6 or 7, further comprising:
a prompting module (170), configured to, in response to the corresponding map failing to be downloaded from the server, prompt a driver to switch to a manual driving mode.

9. The apparatus of claim 8, further comprising:
a collecting module (180), configured to collect point cloud data and image data using a radar and a camera of the self-driving vehicle;
a generating module (190), configured to generate map data according to the point cloud data and the image data; and
a transmitting module (1001), configured to transmit the map data to the server, the server grading the map data to obtain a score, and storing the map data and upgrading the corresponding version number in response to the score being greater than a preset threshold.

10. The apparatus of claim 9, wherein the generating module (190) comprises:
an obtaining unit, configured to obtain the current position of the self-driving vehicle;
a determining unit, configured to determine whether the current position is an entry point of a road; and
a generating unit, configured to, in response to the current position being the entry point of the road, generate the map data starting from the entry point of the road and ending at the exit point where the self-driving vehicle driving out of the road, the map data between the entry point and the exit point of the road being the map data of the road.

11. A computing device, comprising:
a memory;
a processor; and
computer programs stored in the memory and executable by the processor,
wherein when the processor is configured to execute the computer programs, to perform the method according to any one of claims 1 to 5.

12. A computer readable storage medium having stored therein computer programs that, when executed by a processor, causes the processor to perform the method according to any one of claims 1 to 5.
